# EUROPÄISCHE PATENTANMELDUNG

(11) **EP 0 679 493 A2**
(43) Veröffentlichungstag der Anmeldung: **02.11.1995**
(21) Anmeldenummer: 95105260.4
(22) Anmeldetag: 07.04.1995
(51) Int. Cl.: B29C 45/42

(54) **Entnahmevorrichtung für mindestens einen konischen, becherförmigen Kunststoffteil aus einer Spritzgiessmaschine**

(30) Priorität: 26.04.1994 CH 1281/94
(71) Anmelder: Rascher Systemtechnik AG, CH-5001 Aarau (CH)
(72) Erfinder: Rascher, Andreas, CH-5024 Küttigen (CH); Weber, Max, CH-5742 Kölliken (CH)
(74) Vertreter: Morva, Tibor

(57) **Zusammenfassung**

Die Entnahmevorrichtung für mindestens einen konischen, becherförmigen Kunststoffteil (8, 20) aus einer Spritzgiessmaschine enthält einen Entnahmerahmen (7, 11, 28), der mindestens eine für die Entnahme eines Kunststoffteiles (8, 20) aus der Spritzgiessmaschine vorgesehene Aufnahmeöffnung (9, 14, 16, 21, 25, 29) trägt. Der Entnahmerahmen (7, 11, 28) ist zwischen den geöffneten Formwerkzeughälften (1, 2, 3) ein- und ausfahrbar. Die Aufnahmeöffnung (9, 14, 16, 21, 25, 29) ist zwischen den beiden Seiten des Entnahmerahmens (7, 11, 28) durchgehend offen. Der Entnahmerahmen (7, 11, 28) ist schmäler und die Aufnahmeöffnung (9, 14, 16, 21, 25, 29) ist kürzer als die Länge des aufzunehmenden Kunststoffteiles (8, 20). Die Aufnahmeöffnung (9, 14, 16, 21, 25, 29) nimmt einen mittleren Teil der Länge des konischen, becherförmigen Kunststoffteils (8, 20) formschlüssig auf. Der Kunststoffteil (8, 20) wird vom Formkern (5) durch eine Abstossvorrichtung in die Aufnahmeöffnung (9, 14, 16, 21, 25, 29) befördert und anschliessend mit dem Entnahmerahmen (7, 11, 28) aus der Spritzgiessmaschine entnommen.

## Beschreibung

Die vorliegende Erfindung betrifft eine Entnahmevorrichtung für mindestens einen konischen, becherförmigen Kunststoffteil aus einer Spritzgiessmaschine mit einem bei geöffneten Formhälften der Spritzgiessmaschine quer zur Oeffnungsrichtung des Formwerkzeuges zwischen mindestens einem Formkern und mindestens einem diesem Formkern gegenüberliegenden Formhohlraum ein- und ausfahrbaren Entnahmerahmen, der mindestens eine für die Aufnahme eines durch eine Abstossvorrichtung vom Formkern in Richtung des Formhohlraumes beförderten Kunststoffteiles vorgesehene Aufnahmeöffnung trägt.

Aus der EP-A2 0.283.644 ist eine Entnahmevorrichtung der eingangs erwähnten Art bekannt. Bei dieser Entnahmevorrichtung ist ein zwischen den geöffneten Formhälften der Spritzgiessmaschine seitlich einschiebbarer Entnahmerahmen mit mehreren für die Aufnahme der von den Formkernen durch eine Abstossvorrichtung abgestossenen Kunststoffteile bestimmten Sacklöchern vorgesehen. Die Sacklöcher sind für die Kühlung und für die Entnahme der von den Formkernen abgenommenen, wegen der Entformbarkeit konisch ausgebildeten Kunststoffteilen bestimmt. Der Entnahmerahmen ist quer zur Oeffnungsrichtung der Formhälften zur Abgabe der aufgenommenen Kunststoffteile ausserhalb der Spritzgiessmaschine ausfahrbar. Ein Nachteil dieser Anordnung besteht darin, dass der Entnahmerahmen bedingt durch die darin untergebrachten Sacklöcher dicker sein muss als die Länge der in diesen Sacklöchern zu kühlenden und aus der Spritzgiessmaschine auszuladenden Kunststoffteile. Die konischen Kunststoffteile müssen nämlich in die Sacklöcher vollständig eintauchen, um die vorgesehene Kühlung der Kunststoffteile zu erreichen. Aus diesem Grunde muss der Oeffnungsspalt zwischen den Formhälften grösser sein, als die Länge der zu entformenden und auszuladenden Kunststoffteile. Der für die Ausladung der Kunststoffteile erforderliche Abstand zwischen den geöffneten Formhälften beeinflusst aber die Zykluszeit zwischen zwei aufeinanderfolgenden Oeffnungen der Formhälften und dadurch auch die Anzahl der durch die Spritzgiessmaschine in der Zeiteinheit herstellbaren Kunststoffteile, oder die Wirtschaftlichkeit der Spritzgiessmaschine. Ein weiterer Nachteil dieser Entnahmevorrichtung ist dadurch gegeben, dass der Entnahmerahmen eine verhältnismässig grosse Masse aufweist. Bei jeder Entnahmebewegung muss diese Masse beschleunigt werden, wodurch eine rasche Entnahme der Kunsstoffteile aus der Spritzgiessmaschine bei einer vorbestimmten Leistungsaufnahme beschränkt ist. Dies wirkt auf die Ausstossleistung und auf die Wirtschaftlichkeit der Spritzgiessmaschine negativ aus.

Aus der US-A-5125789 ist eine weitere schnellaufende Entnahmevorrichtung für Kunststoffteile aus einer Spritzgiessmaschine bekannt. Bei dieser Entnahmevorrichtung wird jeder zu entnehmende Kunsstoffteil zwischen den geöffneten Formhälften der Spritzgiessmaschine an seinem dem Formkern abgekehrten Teil mit einem Greifer gefasst, worauf der Kunststoffteil vom Formkern durch eine Abstossvorrichtung abgestossen wird. Die Formöffnung der Spritzgiessmaschine muss um die Abmessung dieses Greifers grösser sein als die Abmessung des zu entnehmenden Kunststoffteiles. Zudem muss die Entnahmevorrichtung die quer zur Entnahmerichtung verlaufende Bewegung des Kunststoffteiles beim Abstossen vom Formkern mitmachen. Sowohl die im Verhältnis zur Länge des zu entnehmenden Kunststoffteiles lange, erforderliche Formöffnung als auch die quer zur Entnahmerichtung ausgeführte Bewegung der Entnahmevorrichtung sind mit Zeitaufwand verbunden. Ausserdem ist die bei jedem Entnahmevorgang zu beschleunigende Masse der Entnahmevorrichtung verhältnismässig gross, so dass bei gleichbleibender Leistungsaufnahme die Zykluszeiten auch verhältnismässig lang sind. Aus diesen Gründen ist die Anzahl der in der Zeiteinheit herstellbaren Kunststoffteile mit dieser Spritzgiessmaschine verhältnismässig gering.

Aufgabe der vorliegenden Erfindung ist es, eine Entnahmevorrichtung der eingangs erwähnten Art weiter zu entwickeln, um eine einfache und kostengünstige Herstellung von konischen Kunststoffteilen durch eine Spritzgiessmaschine mit verhältnismässig kurzen Zykluszeiten zu erreichen.

Die gestellte Aufgabe ist dadurch gelöst, dass die Aufnahmeöffnung zwischen den beiden Seiten des Entnahmerahmens durchgehend offen ausgebildet ist, wobei der Entnahmerahmen schmäler und die Aufnahmeöffnung kürzer sind als die Länge des aufzunehmenden Kunststoffteiles und die Aufnahmeöffnung einen mittleren Teil der Länge des konischen, becherförmigen Kunststoffteiles formschlüssig aufnimmt. Die zwischen den beiden Seiten des Entnahmerahmens durchgehend offene Aufnahmeöffnung ist geeignet, die aus der Spritzgiessmaschine auszuladenden, konischen, becherförmigen Kunststoffteile so aufzunehmen, dass an den beiden Seiten der Aufnahmeöffnung die Enden des Kunststoffteiles vorstehen. Dadurch, dass der Entnahmerahmen schmäler und die Aufnahmeöffnung kürzer sind als die Länge eines Kunststoffteiles, ist der Abstand zwischen den geöffneten Formhälften nur durch die Länge des hergestellten Kunststoffteiles bestimmt und ist von der Breite des Entnahmerahmens und von der Länge der Aufnahmeöffnung unabhängig. Die formschlüssige Aufnahme eines durch die Abstossvorrichtung in die durch den Entnahmerahmen getragene Aufnahmeöffnung eingebrachten Kunststoffteiles ermöglicht eine einfache Halterung des Kunststoffteiles während dessen Ausladung. Die Masse des in Bezug auf die Länge eines zu entnehmenden Teiles schmalen Entnahmerahmens ist verhältnismässig klein, wodurch grosse Beschleunigungen und eine rasche Entnahme der Kunststoffteile aus der Spritzgiessmaschine möglich sind. Durch die Durchführung dieser Massnahmen erwächst ein Gewinn in der Zykluszeit und damit auch ein wirtschaftlicher Vorteil.

Die Aufnahmeöffnung kann einen Querschnitt aus der Gruppe von Querschnitten aufweisen, deren Umfang sich je aus Kreisbögen und geraden Stücken zusammensetzt oder mindestens teilweise oval oder mindestens teilweise ellipsenförmig ist. Der Querschnitt der Aufnahmeöffnung ist jeweils der gewünschten Form des Kunststoffteiles anpassbar.

Die Aufnahmeöffnung kann innen einen runden Querschnitt aufweisen. In die runde Aufnahmeöffnung kann mindestens ein O-Ring eingelegt sein. Das Einlegen eines O-Ringes in die Aufnahmeöffnung ermöglicht darin eine besonders gute Halterung des konischen Kunststoffteils durch Erhöhung der Reibung.

Die Aufnahmeöffnung kann einen Querschnitt mit mindestens drei Ecken aufweisen. Die so ausgebildete Aufnahmeöffnung ist geeignet für die Aufnahme von Bechern mit eckigem Querschnitt.

In die Wandung der Aufnahmeöffnung mündet vorteilhafterweise mindestens eine in zentraler Richtung offene Medienleitung für Vakuum und/oder Druckgas. Durch in der Aufnahmeöffnung erzeugtes Vakuum können auch Kunststoffteile mit nicht selbsthemmend in der Aufnahmeöffnung liegenden Mantelflächen oder Kunststoffteile mit zwar selbsthemmenden aber nicht genügend in die Aufnahmeöffnung hineingeschobenen Mantelflächen darin gehalten werden. Mit in die Aufnahmeöffnung eingelassenem Druckgas kann der Kunststoffteil aus der Aufnahmeöffnung vorteilhaft gelöst und aus dem aus dem Bereich der Spritzwerkzeughälften ausgefahrenen Entnahmerahmen entfernt werden.

Die Aufnahmeöffnung kann in ihrer Wandung mindestens eine von aussen mittels Gasdruckänderung betätigbare Klemmembrane aufweisen. Die Klemmembrane umschliesst den konischen Kunststoffteil auch bei fehlender selbsthemmender Haftung in der Aufnahmeöffnung.

Die Aufnahmeöffnung kann mindestens drei nach innen gerichtete, dem konischen Bereich des Kunststoffteiles angepasste Zentrierstege aufweisen. Die Zentrierstege bieten für einen aufzunehmenden Kunststoffteil eine gute Führung in der Aufnahmeöffnung.

Mindestens an der dem Formkern zugekehrten Seite des Entnahmerahmens, an der Mündung der Aufnahmeöffnung kann mindestens ein quer zur Verschieberichtung des Entnahmerahmens innerhalb des für den aufgenommenen Kunststoffteil vorgesehenen Bereiches vorstehender, für die Einführung des Kunststoffteiles in die Aufnahmeöffnung bestimmter Führungsfortsatz angeschlossen sein. Der Führungsfortsatz ermöglicht die Herstellung besonders langer, über die Breite des Entnahmerahmens weit hinausreichenden Kunststoffteile mit dem für andere, kürzere Kunststoffteile vorgesehenen Entnahmerahmen.

Die Aufnahmeöffnung nimmt den Kunststoffteil vorteilhafterweise selbsthemmend auf. Dadurch, dass der Kunststoffteil in der Aufnahmeöffnung selbsthemmend hält, sind keine weiteren Massnahmen zur Halterung des Kunststoffteiles in der Aufnahmeöffnung erforderlich. Die wirtschaftlichen Vorteile dieser Lösung sind einleuchtend.

Die Aufnahmeöffnung kann in einem im Entnahmerahmen auswechselbar eingesetzten Aufnahmering angeformt sein. Der auswechselbare Aufnahmering ermöglicht die Anwendung eines einzigen Entnahmerahmens für mehrere Kunststoffteile mit unterschiedlichen Querschnitten. Der Aufnahmering kann dabei mehrteilig ausgebildet sein. Ein mehrteiliger Aufnahmering ist im Aufnahmerahmen einfach auswechselbar.

Im folgenden werden anhand der beiliegenden Zeichnungen Ausführungsbeispiele der Erfindung näher beschrieben. Es zeigen:
Fig.1 eine schematische Darstellung des Formwerkzeuges einer Spritzgiessmaschine,
Fig.2 einen Teil eines Entnahmerahmens mit einem eingesetzten, mehrteiligen Aufnahmering in Seitenansicht und
Fig.3 im Schnitt mit einem konischen Kunststoffteil,
Fig.4 einen Aufnahmering mit eingelegten O-Ringen in Seitenansicht und
Fig.5 im Schnitt,
Fig.6 einen Aufnahmering für die Aufnahme von eckigen, becherförmigen Kunststoffteilen mit einer pneumatischen Klemmembrane in Seitenansicht und
Fig.7 im Schnitt,
Fig.8 einen Aufnahmering mit in der Wandung der Aufnahmeöffnung mündender Medienleitung für Vakuum und /oder Druckgas in Seitenansicht und
Fig.9 im Schnitt,
Fig.10 einen Teil eines Entnahmerahmens mit einer Aufnahmeöffnung mit vier Zentrierstegen in Seitenansicht und
Fig.11 im Schnitt.

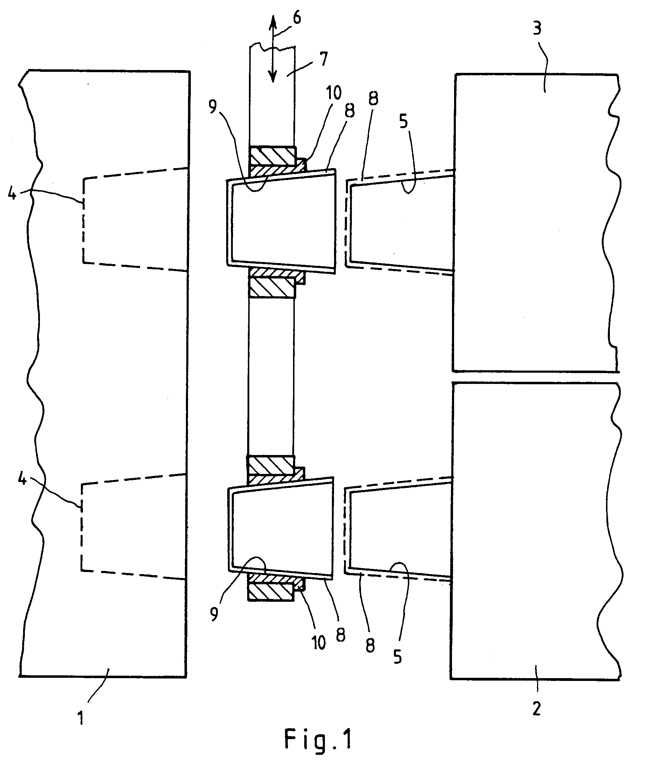

Die schematische Darstellung in Fig.1 zeigt die geöffneten Formwerkzeughälften 1, 2, 3 einer Spritzgiessmaschine. Die eine Formwerkzeughälfte 1 ist mit mehreren, mit gestrichelten Linien angedeuteten Formhohlräumen 4 versehen. Die anderen Formwerkzeughälften 2, 3 sind voneinander getrennt und tragen Formkerne 5. Zwischen den geöffneten Formwerkzeughälften 1, 2, 3 befindet sich ein in Pfeilrichtung 6 quer zur Oeffnungsrichtung der Formwerkzeughälften 1, 2, 3 ein- und ausfahrbarer Entnahmerahmen 7. Wegen der besseren Uebersichtlichkeit sind in Fig.1 weder die Führungs- und Bewegungselemente der Formwerkzeughälften 1, 2, 3 und des Entnahmerahmens 7, noch die giesstechnischen Teile der Spritzgiessmaschine dargestellt.

Die Spritzgiessmaschine ist für die Herstellung von konischen, becherförmigen Kunststoffteilen 8 vorgesehen. In Fig.1 ist mit gestrichelten Linien angedeutet, dass die Kunststoffteile 8 nach der Oeffnung der Formwerkzeughälften 1, 2, 3 noch auf den Formkernen 5 sitzen. Eine nicht näher dargestellte, allgemein bekannte Abstossvorrichtung befördert die Kunststoffteile 8 von den Formkernen 5 in Richtung der Formhohlräume 4. Zu diesem Zeitpunkt liegt aber der Entnahmerahmen 7 bereits zwischen den Formwerkzeughälften 1, 2, 3, so dass die von den Formkernen 5 abgestossenen Kunststoffteile 8 in den Aufnahmeöffnungen 9 des Aufnahmerahmens 7 aufgefangen werden. Die durch den Aufnahmerahmen 7 getragenen Aufnahmeöffnungen 9 sind zwischen den beiden Seiten des Aufnahmerahmens 7 durchgehend offen ausgebildet. Nachdem der Entnahmerahmen 7 schmäler und die Aufnahmeöffnungen 9 kürzer sind als die Länge eines Kunststoffteiles 8 und die Aufnahmeöffnung 9 nur den mittleren Teil der Länge des Kunststoffteiles 8 formschlüssig umschliesst, ist der erforderliche Oeffnungsspalt zwischen den Formwerkzeughälften 1, 2, 3 nur durch die Länge des Kunststoffteiles 8 bedingt. Dieser kürzest mögliche Oeffnungsspalt ermöglicht auch eine kürzest mögliche Zykluszeit zwischen je zwei aufeinanderfolgenden Oeffnungen der Formwerkzeughälften 1, 2, 3. Die Aufnahmeöffnung 9 umschliesst den konischen Teil des Kunststoffteiles 8 formschlüssig, so dass dieser in der Aufnahmeöffnung für eine Ausladebewegung des Entnahmerahmens 7 ausreichend gehalten ist.

Die Aufnahmeöffnung 9 weist einen runden Querschnitt auf und ist in einem im Entnahmerahmen 7 auswechselbar eingesetzten Aufnahmering 10 angeformt. Der Kunststoffteil 8 liegt in der Aufnahmeöffnung 9 selbsthemmend, so dass während einer Ausladebewegung des Entnahmerahmens 7 eine sichere Halterung des Kunstoffteiles 8 gewährleistet ist. Der Querschnitt der Aufnahmeöffnung ist der jeweiligen Form des herzustellenden, becherförmigen Kunststoffteiles angepasst. Im allgemeinen weist der Umfang des Kunststoffteiles Formen auf, die sich je aus Kreisbögen und geraden Stücken zusammensetzen oder mindestens teilweise oval oder mindesten teilweise ellipsenförmig sind. Die üblichen, zusätzlichen, speziellen Ausbildungen der Formhälften beispielsweise für Tassen mit Griff sind selbstverständlich auch anwendbar.

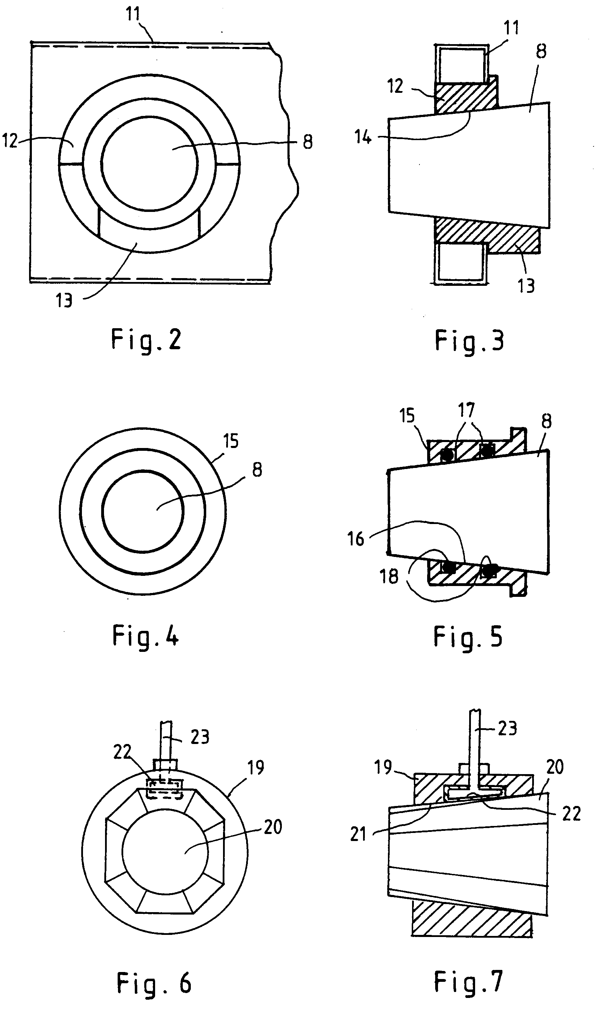

Fig.2 zeigt einen Teil eines Entnahmerahmens 11 mit einem eingesetzten, mehrteiligen Aufnahmering 12 in Seitenansicht und Fig.3 die gleiche Anordnung im Schnitt. Der Aufnahmering 12 besteht aus einer oberen und aus einer unteren Hälfte. Die untere Hälfte des Aufnahmeringes 12 ist an der dem Formkern zugekehrten Seite des Entnahmerahmens 11 mit einem Führungsfortsatz 13 versehen. Dieser Führungsfortsatz 13 steht der Mündung der Aufnahmeöffnung 14 quer zur Verschieberichtung des Entnahmerahmens 11 vor und liegt innerhalb des für den aufgenommenen Kunststoffteil 8 vorgesehenen Bereiches. Mit Hilfe des Führungsfortsatzes 13 wird die Einführung eines vom Formkern 5 entfernten Kunststoffteiles 8 in die Aufnahmeöffnung 14 erleichtert. Ausserdem kann ein im Verhältnis zur Länge des Kunststoffteiles 8 schmaler Entnahmerahmen 11 verwendet werden. Mit einem Entnahmerahmen und mit verschiedenen im Entnahmerahmen eingesetzten Aufnahmeringen mit oder ohne Führungsfortsatz kann die Entnahmevorrichtung für unterschiedlich lange und dicke konische becherförmige Kunststoffteile eingesetzt werden.

Der in Fig.4 in Seitenansicht und in Fig.5 im Schnitt dargestellte Aufnahmering 15 weist eine runde konische Aufnahmeöffnung 16 auf. Um die Halterung des Kunststoffteiles 8 in der Aufnahmeöffnung 16 während dem Entnahmevorgang des Kunststoffteiles 8 zu verbessern, sind in den in der Wandung der Aufnahmeöffnung 16 angebrachten Nuten 17 zwei O-Ringe 18 eingelegt. Die O-Ringe 18 vergrössern die Reibung zwischen der Wandung der Aufnahmeöffnung 16 und dem darin eingeführten Kunststoffteil 8.

Fig.6 zeigt in Seitenansicht einen in einen Entnahmerahmen einsetzbaren Aufnahmering 19 für eckige Kunststoffteile 20. In Fig.7 ist ein Längsschnitt dieses Aufnahmeringes 19 mit einem eckigen Kunststoffteil 20 dargestellt. Um während der Entnahme des Kunststoffteiles 20 aus der Spritzgiessmaschine die Halterung des Kunststoffteiles 20 im Aufnahmering 19 sicherzustellen, ist in der Wandung der Aufnahmeöffnung 21 eine von aussen durch Gasdruckänderung betätigbare Klemmembrane 22 angeordnet. Die Klemmembrane 22 ist der der Aufnahmeöffnung 21 zugekehrte Teil eines geschlossenen, aus einem elastischen Material, wie Kunststoff oder Gummi bestehenden Balges. Der Balg ist über einen Hohlleiter 23 wahlweise entweder an einer Druckgasquelle oder an einer Entlüftungsöffnung angeschlossen. Nach Einführung des Kunststoffteiles 20 in die Aufnahmeöffnung 21 wird der Balg unter Gasdruck gesetzt, wobei die Klemmembrane 22 sich an den Kunststoffteil 20 schmiegt und so diesen festhält. Bei aus der Spritzgiessmaschine ausgefahrenen Entnahmerahmen und Aufnahmering 19 wird der Druck im Balg durch Lüftung oder Vakuumanschluss so weit herabgesetzt, dass die Klemmembrane 22 ihre Klemmwirkung verliert. Danach kann der Kunststoffteil 20 aus der Aufnahmering 19 gestossen werden.

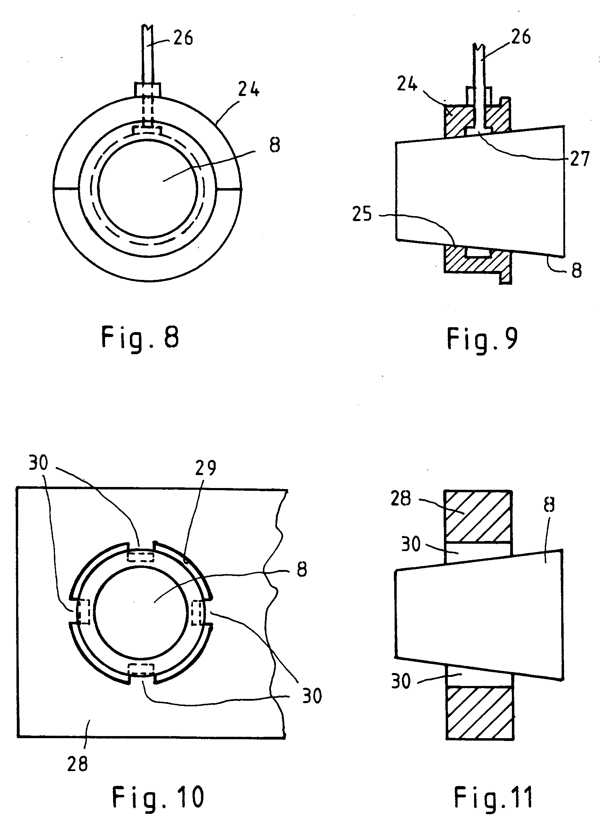

Die Figuren 8 und 9 zeigen eine weitere Variante eines Aufnahmeringes 24 wieder in Seitenansicht bzw. im Schnitt. Der Aufnahmering 24 ist wieder aus zwei schalenförmigen Teilen zusammengesetzt. In die Wandung der Aufnahmeöffnung 25 mündet eine offene Medienleitung 26. Die Mündung 27 der Medienleitung 26 weist die Form einer Ringnut auf. Die Medienleitung 26 ist an einer Vakuum- bzw. Druckgasquelle angeschlossen. Der in die Aufnahmeöffnung 25 eingebrachte Kunststoffteil 8 wird darin während dem Entnahmevorgang durch Vakuum sicher festgehalten. Ausserhalb der Spritzgiessmaschine wird der Kunststoffteil 8 in der Aufnahmeöffnung 25 durch Zuführung von Druckgas gelöst.

In Fig.10 ist ein Teil eines Entnahmerahmens 28 in Seitenansicht und in Fig.11 im Schnitt dargestellt. Die im Entnahmerahmen 28 direkt angebrachte Aufnahmeöffnung 29 trägt vier nach innen gerichtete Zentrierstege 30. Die Zentrierstege 30 sind dem konischen Bereich des Kunststoffteiles 8 angepasst, so dass die formschlüssige Aufnahme des Kunststoffteiles 8 in der Aufnahmeöffnung 29 sichergestellt ist.

## Patentansprüche

1. Entnahmevorrichtung für mindestens einen konischen, becherförmigen Kunststoffteil aus einer Spritzgiessmaschine mit einem bei geöffneten Formhälften der Spritzgiessmaschine quer zur Oeffnungsrichtung des Formwerkzeuges zwischen mindestens einem Formkern und mindestens einem diesem Formkern gegenüberliegenden Formhohlraum ein- und ausfahrbaren Entnahmerahmen, der mindestens eine für die Aufnahme eines durch eine Abstossvorrichtung vom Formkern in Richtung des Formhohlraumes beförderten Kunststoffteiles vorgesehene Aufnahmeöffnung trägt, **dadurch gekennzeichnet, dass** die Aufnahmeöffnung (9, 14, 16, 21, 25, 29) zwischen den beiden Seiten des Entnahmerahmens (7, 11, 28) durchgehend offen ausgebildet ist, wobei der Entnahmerahmen (7, 11, 28) schmäler und die Aufnahmeöffnung (9, 14, 16, 21, 25, 29) kürzer sind als die Länge des aufzunehmenden Kunststoffteiles (8, 20) und die Aufnahmeöffnung (9, 14, 16, 21, 25, 29) einen mittleren Teil der Länge des konischen, becherförmigen Kunststoffteiles (8, 20) formschlüssig aufnimmt.

2. Entnahmevorrichtung nach Anspruch 1, **dadurch gekennzeichnet, dass** die Aufnahmeöffnung (9, 14, 16, 21, 25) einen Querschnitt aus der Gruppe von Querschnitten aufweist, deren Umfang sich je aus Kreisbögen und geraden Stücken zusammenstzt oder mindestens teilweise oval oder mindestens teilweise ellipsenförmig ist.

3. Entnahmevorrichtung nach Anspruch 2, **dadurch gekennzeichnet, dass** die Aufnahmeöffnung (9, 14, 16, 25) einen runden Querschnitt aufweist.

4. Entnahmevorrichtung nach Anspruch 3, **dadurch gekennzeichnet, dass** in die Aufnahmeöffnung (16) mindestens ein O-Ring (18) eingelegt ist.

5. Entnahmevorrichtung nach Anspruch 2, **dadurch gekennzeichnet, dass** die Aufnahmeöffnung (21) einen Querschnitt mit mindestens drei Ecken aufweist.

6. Entnahmevorrichtung nach einem der Ansprüche 1 bis 5, **dadurch gekennzeichnet, dass** in die Wandung der Aufnahmeöffnung (25) mindestens eine in zentraler Richtung offene Medienleitung (26) für Vakuum und/oder Druckgas mündet.

7. Entnahmevorrichtung nach einem der Ansprüche 1 bis 5, **dadurch gekennzeichnet, dass** die Aufnahmeöffnung (21) in ihrer Wandung mindestens eine von aussen mittels Gasdruckänderung betätigbare Klemmembrane (22) aufweist.

8. Entnahmevorrichtung nach Anspruch 1, **dadurch gekennzeichnet, dass** die Aufnahmeöffnung (29) mindestens drei nach innen gerichtete, dem konischen Bereich des Kunststoffteiles (8) angepasste Zentrierstege (30) aufweist.

9. Entnahmevorrichtung nach einem der Ansprüche 1 bis 8, **dadurch gekennzeichnet, dass** mindestens an der dem Formkern (5) zugekehrten Seite des Entnahmerahmens (11), an der Mündung der Aufnahmeöffnung (14) mindesetns ein quer zur Verschieberichtung des Entnahmerahmens (11) innerhalb des für den aufgenommenen Kunststoffteil (8) vorgesehenen Bereiches vorstehender, für die erleichterte Einführung des Kunststoffteiles (8) in die Aufnahmeöffnung (14) bestimmter Führungsfortsatz (13) angeschlossen ist.

10. Entnahmevorrichtung nach einem der Ansprüche 1 bis 8, **dadurch gekennzeichnet, dass** die Aufnahmeöffnung (9, 14, 16, 29) den Kunststoffteil (8) selbsthemmend aufnimmt.

11. Entnahmevorrichtung nach einem der Ansprüche 1 bis 10, **dadurch gekennzeichnet, dass** die Aufnahmeöffnung (9, 14, 16, 21, 25) in einem im Entnahmerahmen (7, 11) auswechselbar eingesetzten Aufnahmering (10, 12, 15, 19, 24) angeformt ist.

12. Entnahmevorrichtung nach Anspruch 11, **dadurch gekennzeichnet, dass** der Aufnahmering (12, 24) mehrteilig ausgebildet ist.
